# EUROPEAN PATENT APPLICATION

(11) **EP 1 473 626 A1**
(43) Date of publication of application: **03.11.2004**
(21) Application number: 04252485.0
(22) Date of filing: 29.04.2004
(51) Int. Cl.: G06F 9/44, G10L 15/22, G10L 15/26

(54) **Enhanced graphical development environment for controlling mixed initiative applications**

(30) Priority: 02.05.2003 US 429011
(71) Applicant: Intervoice Limited Partnership, Reno, NV 89509 (US)
(72) Inventor: Hambleton, Myra, Plano TX 75075 (US); Galles, Charles, Plano TX 75023 (US); Fuentes, John, Murphy TX 75094 (US)
(74) Representative: Jackson, Richard Eric

(57) **Abstract**

The present invention is directed to a system and method which promotes conversational mixed initiative applications by taking advantage of additional grammars that are active. In one embodiment, the development environment allows an application designer to define a navigational grammar, a universal grammar, and a directed dialog call flow grammar. The grammars can be active throughout the call flow or at selected times and are weighted to work with all of the directed grammars. The processing that is followed by each of these grammars is defined separately so that each grammar can be context sensitive.

## Description

### CROSS-REFERENCE TO RELATED APPLICATIONS

This application is related to concurrently filed, co-pending, and commonly assigned U.S. Application No. 10/428,723, filed on May 2, 2003, entitled "SYSTEM AND METHOD TO GRAPHICALLY FACILITATE SPEECH ENABLED USER INTERFACES;" commonly assigned U.S. Application Serial No. 09/687,296, filed October 13, 2000, entitled "GRAPHICAL PROGRAMMING LANGUAGE FOR REPRESENTATIONS OF CONCURRENT OPERATIONS;" and commonly assigned U.S. Application Serial No. 09/603,334, filed June 26, 2000, entitled "ENHANCED GRAPHICAL DEVELOPMENT ENVIRONMENT FOR CONTROLLING PROGRAM FLOW," the disclosures of which are hereby incorporated herein by reference.

### TECHNICAL FIELD

This invention relates to graphical development systems and more particularly to systems and methods for a graphical development environment for mixed initiative applications, and even more particularly interactive voice response applications.

### BACKGROUND OF THE INVENTION

Interactive voice response (IVR) systems have been in use for some time now. Typically, such systems operate such that a calling user is asked a series of questions and is prompted to give a response. At first, these responses were accomplished by the user touching a keypad number. In such systems the calling user would be prompted as follows: "Please touch one for today's flights and touch two for all other flight information."

More recent system allow the user to answer verbally. Thus the user prompts for such systems would be: "Please say one for today's flights and say two for all other flight information." An alternate prompt would be: "Please say yes if you are flying today and no if you are flying any other day." Another alternate prompt would be: "Say the time you would like to fly." The user would be expected to respond with, "this morning" or "five p.m."

The designer of such systems must code each application such that it follows a specific script, or call flow. Tools, including graphical tools using icons, are typically used for such application call flow coding. One example of such a tool is shown in U.S. Patent 5,946,485, dated August 31, 1999; and U.S. Patent 6,131,184, dated October 10, 2000, both of which are incorporated by reference herein.

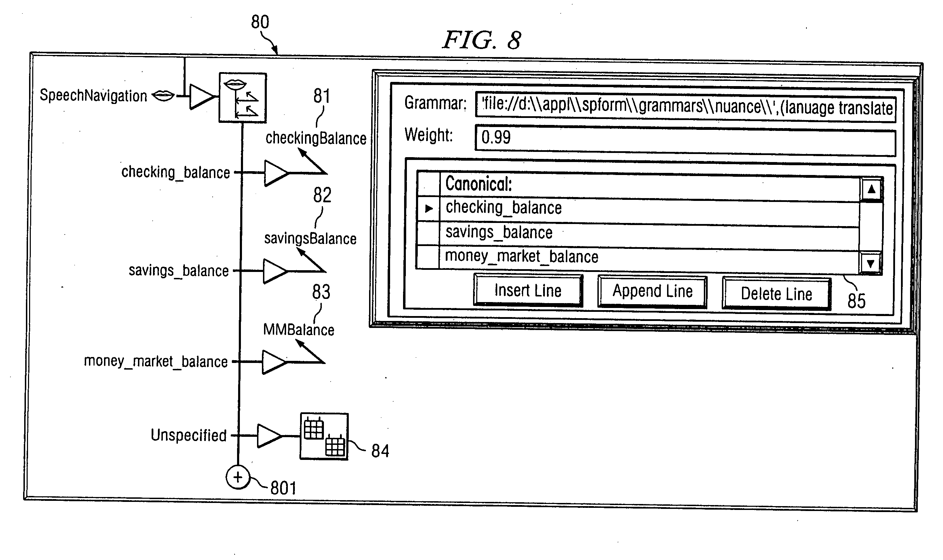

In such prior art call flow tools, icons are used to illustrate for the designer the pertinent details of the call flow so that the designer could rearrange the call flow, or insert other paths or options into the call flow. Thus, in the prior art there is a single icon such as icon 80, shown in FIGURE 8, that a user places in the call flow that represents the entire event recognition call flow. The designer could supply several parameters that are used in defining the particular event to be recognized. However, in order to change the event recognition format, a designer would have to add code to vary the structure or process which is to be followed by the standard event handled icon. In the prior art, a single icon represents a single recognition event including all actions leading to resolution of that recognition event.

Recently, IVR systems have begun to incorporate more complex caller voice recognition events, so that the caller might now hear the following prompt: "Please tell me your flight date and destination city." These more complex types of recognition events are more difficult to program and to represent by a single icon.

Caller (talker) directed systems rely on the recognition of various responses from the calling user and can be as free-flowing as desired. Thus, a prompt could be: "Please tell me what I can do for you today." A more typical prompt would be more specific, such as: "Please tell me what day you are flying and what flight number you are asking about." Speech recognition is then used to determine what the talker has responded.

The systems discussed above are called directed systems in which questions are asked of a called or calling (talker) user and the system responds to the answer to these questions. However, it is desired to allow a user to depart from the scripted questions and ask a question of his/her own, or answer a question that has not been prompted for by the call flow. These applications are known as mixed initiative applications, and present a host of problems for the designer who is trying to develop a proper call flow for such a mixed initiative application.

One simple example of a mixed initiative application would be when the speaker says "help" in response to a directed question. Another example, would be when a speaking user, in response to a directed question, such as, "Are you flying today or tomorrow?" answers, "I'm not flying, I have a question." Or answers: "I'm flying next month." Or answers with a question, such as: "Do you have late afternoon flights to City XYZ?"

With the current state of the art, the application designer must anticipate and code each of these scenarios. Current graphical icon application tools do not work for speech recognition applications, and particularly not for mixed initiative applications. Today in the industry, a recognition event is handled by defining everything inside a single icon. So graphically, an icon has a bunch of parameters contained within it. The application designer then, in order to customize an application, must create code which modifies the operation of the existing code associated with the standard icon.

The call flow in speech recognition applications relies on the generation, and ultimately the recognition, of certain grammars. Each grammar is a collection of words on phrases that are passed to a system component. The speech recognition component then "listens" to the user input to determine if the user spoke one of the defined phrases. If the user spoke one of those phrases, that phrase is passed back to the application for subsequent processing within the call flow.

In order to accommodate mixed initiative applications, the designer must have more than one grammar active at any given time. The first active grammar being the grammar associated with the directed questions, i.e the grammar that is "expected" to be received from the speaker. The second (or subsequent) grammars that are active are those pertaining to a wide range of other responses. Some of these can always be active (help, emergency, operator) and others can be active in context to the basic grammar (next month, different city name, etc).

Also, it is important that when the speaker goes "off script", the response to that user be appropriate for the words spoken by the speaker. Thus, given the wide range of possible responses, the design and subsequent coding of such applications becomes difficult. This problem is compounded when a user is in the middle of a translation and asks a question so that the user can obtain information necessary for continuing the transaction. For example, a user might be asked to "say the amount you wish to transfer." In response thereto, the user asks, "How much money do I have in my savings account?". The system has now received an "off-script" question and must deal with that answer before going forward.

### BRIEF SUMMARY OF THE INVENTION

The present invention is directed to a system and method which promotes conversational mixed initiative applications by taking advantage of additional grammars that are active. In one embodiment, the development environment allows an application designer to define a navigational grammar, a universal grammar, and a directed dialog call flow grammar. The grammars can be active throughout the call flow or at selected times and are weighted to work with all of the directed grammars. The processing that is followed by each of these grammars is defined separately so that each grammar can be context sensitive.

Thus, for example, when a talking user says "checking balance," in answer to a question, the system can stop what it is doing with respect to that talking customer, and then retrieve the checking balance call flow routine, which is then started fresh with that caller. Alternatively, the system could obtain the checking balance and then continue the application it was working on with that talking user prior to the user's utterance. Thus, the user may be in the middle of a funds transfer scenario and may have given the "from" account' and the "to" account, but for some reason then says: "I want my checking balance." The system then obtains the checking balance using the checking balance call flow (or a portion thereof), telling the balance to the user and then continuing with the funds transfer call flow. At other times, and again depending on the context, when the calling user says, "I want my checking balance," the system and method of our invention stops what it is doing and enters the full call flow routine for checking balances and does not return to what was being done prior to that time.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated by those skilled in the art that the conception and specific embodiment disclosed may be readily utilized as a basis for modifying or designing other structures for carrying out the same purposes of the present invention. It should also be realized by those skilled in the art that such equivalent constructions do not depart from the spirit and scope of the invention as set forth in the appended claims. The novel features which are believed to be characteristic of the invention, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present invention.

### BRIEF DESCRIPTION OF THE DRAWINGS

For a more complete understanding of the present invention, reference is now made to the following descriptions taken in conjunction with the accompanying drawing, in which:

FIGURE 1 is one embodiment of an anticipated mixed use call flow graphical representation;

FIGURE 2 shows a single slot graphical display of a 'no match', 'no input' loop;

FIGURE 3 shows a multi-slot graphical display of match conditions;

FIGURE 4 shows the validation loop;

FIGURES 5, 6, and 7 show examples of graphical forms used to establish and control call flows;

FIGURE 8 shows one embodiment of a navigational grammar;

FIGURE 9 shows examples of inline behaviors for universal grammars; and

FIGURE 10 shows an example of message control for delivering messages in context.

### DETAILED DESCRIPTION OF THE INVENTION

In the discussion that is to follow the term grammar is used to mean a phrase, or collection of phrases, that is stored in anticipation of a calling (or called) user uttering one of those phases in response to a question presented to the calling (or called) user. Thus, if the presented question is "What is your favorite color?", the 'grammar' would consist of a list of colors. In response to the question: "What is your favorite color?" the user could name a color. The speech containing the color utterance would then be passed to the component that matches the received utterance (grammar) with the prestored grammar. If the answer matches any of the items in the prestored grammar then a valid indication is passed back to the application together with the color response in coded form. Also passed back to the system, is a code representing the level of confidence the system has in knowing which color was uttered. If the answer does not match the presented question (i.e., the talker said "hot"), or if the confidence level is below an acceptable threshold, then a mismatch condition occurs. The mismatch could be because the talker answered by naming a color not on the list, or the talker could have spoken a word or phase out of context, or a no-input condition could have occurred if the talker did not speak at all.

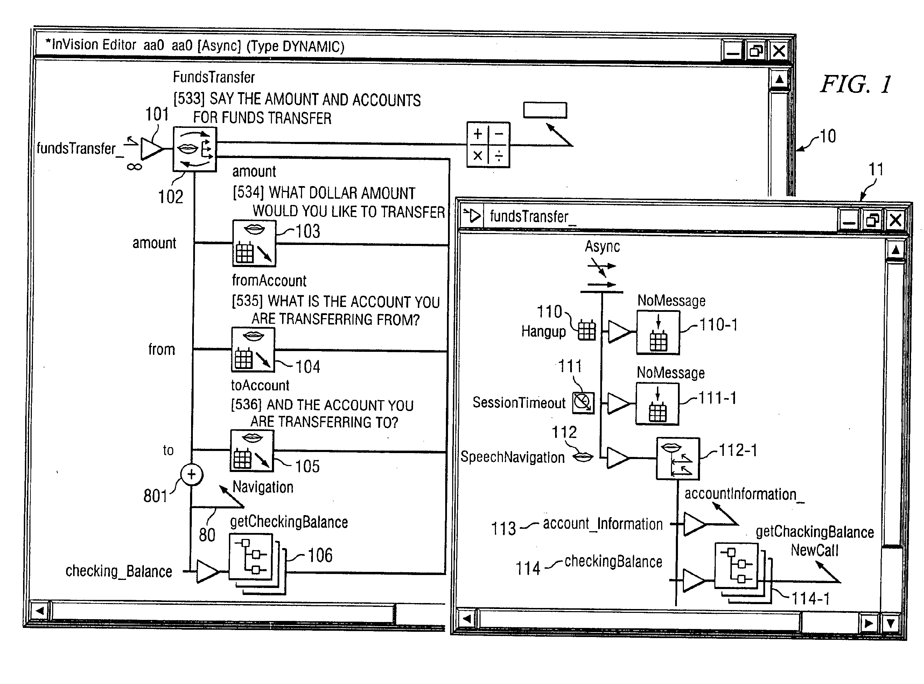

Turning now to FIGURE 1, call flow 10 is a directed dialog call flow and can be controlled, for example, as shown in the above-identified copending application. Thus, in the funds transfer application, there would be a function called funds transfer 101. This is a sub-routine actually where the system says, via 101, "Please say the amount and accounts for the funds transfer." In that context, if the talker wants to take over the call flow and request his/her checking balance, this can be accomplished because the system has defined 'checking balance' to be a navigational grammar, as shown on asynchronous screen 11.

The navigational grammars are defined on the asynchonrous screen so that the user can interrupt the directed dialog call flow at any time. The processing for what the caller wants will be accomplished under the call flow for the asynchronous page.

In operation, in one embodiment, there are two pages, one for asynchronous events (screen 11) and one for directed answer events (10). When a user is working under call flow 10 and says an out-of-context word or phrase, as controlled by icon 106, the system remembers the context in which such word is said and then processes the request via the asynchronous page. Because the system is in the middle of a funds transfer and the programmer has established that the context should be remembered if a non-script event occurs, the system will come back and complete the funds transfer routine.

After retrieving the proper balance, the speaker would then have his/her account balance so the speaker would then be ready to proceed with the application he/she was using prior to the 'interruption.' Sometimes the speaker will ask for information necessary for the active routine and when that information is retrieved it is plugged directly into the routine. For example, assume a caller is trying to report an auto accident and calls his/her insurance company. The IVR answering system might ask for the policy number. The user could respond, "what is my policy number?", the system could then launch into a routine for asking questions to identify the caller so as to retrieve his/her policy. When the policy number is retrieved, it can be spoken to the caller, or for privacy, it might just be entered into the original accident reporting routine and that routine restarted where it left off. Perhaps the caller would be told, "We have identified your policy. Now tell us where the accident occurred."

The navigation page, as controlled by icon 106, is a page where phrases are identified that basically change the context. In the example being discussed, where the user asked for his/her account balance, the system understood that the context is being changed. Accordingly, the first thing that must happen is a recognition that the context is being changed.

Let us assume that the talking user is in the process of listening to rate information and following a menu of presented options and the user says, "What is my mortgage payment?". This is a navigation phrase or a change in context phrase. However, because the context of the call flow is a rate application and the question is one that was anticipated for rate application call flows, the system will answer the payment question and then come back to the rate application. The system remembers the context of the current conversation, but still answers the caller's question.

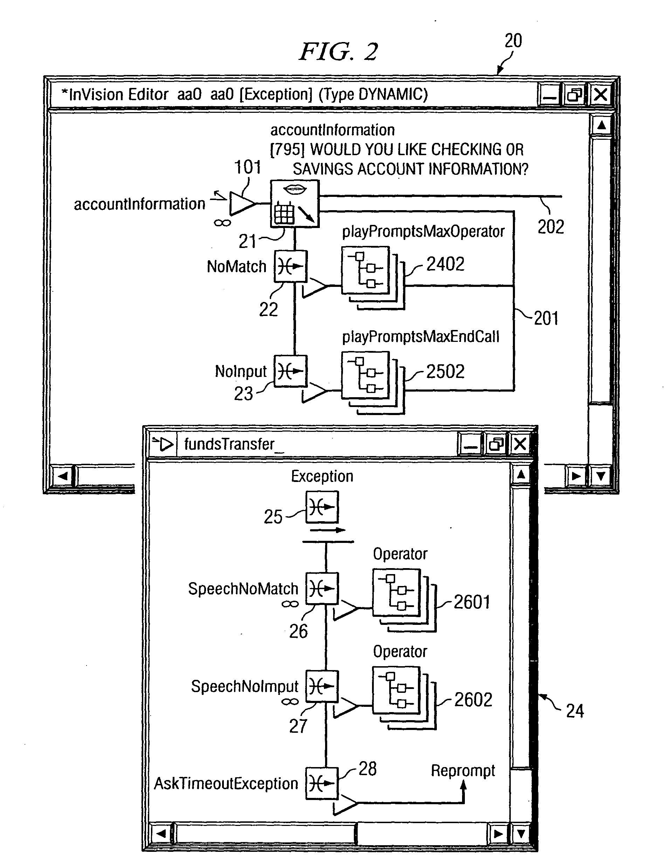

The operation of the system and method of FIGURE 1 will now be discussed with reference to FIGURES 2, 3 and 4.

Turning now to FIGURE 2, icon 21 shows what the prompt would be for one branch, branch 20, of the call flow. FIGURE 2 shows primarily the no match, no input portions of the call flow in a graphical manner.

Icon 21 is a user prompt asking the user to state the desired account number two digits at a time. The spoken response from the talker is passed to voice recognition components (not shown) over path 202. At this point, for this presented question, the grammar has been preset, and consists of numbers.

The system graphically displays the processing of the call flow when a word outside of the grammar is spoken, which is the no-match situation. The no-match display shows two possibilities; a mismatch 22 and a no-input 23. As discussed above, when the talker responds with a word outside of the grammar, as shown by icon 22, there is a mismatch condition. When no input is detected, as shown by icon 23, there is a no-input condition. In each of these conditions, the designer can define the subroutines 2402, 2502 that will be followed by simply moving the icons to their appropriate position.

Path 201 is a looping construct. The display shows lines that represent the behavior of looping which is back around to prompting icon 21. The designer, using the system and method discussed, may, if desired, break the loop. This break could result in a call going to an operator, or a simple hang-up, or by a message being played to the caller telling the caller that the session is being terminated.

Screen 24 controls the no match and no input situations for exceptions, i.e. when a user says a word or phrase out of context. Icons 25, 26, 27, 28, 2601 and 2602 control the functions as discussed above.

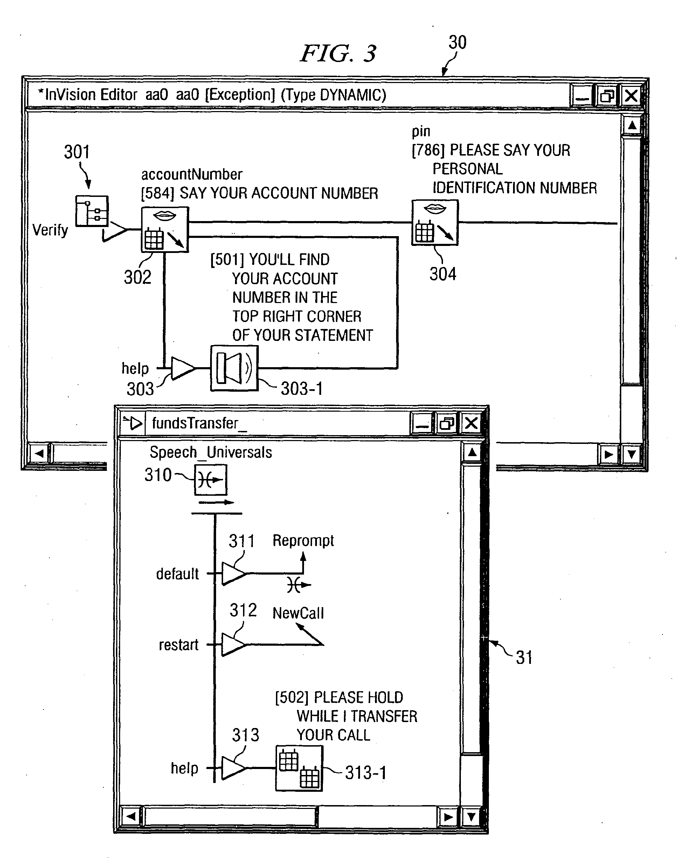

Turning now to FIGURE 3 there is shown call flow display 30 which is an example of an exception routine where the talking user cannot find his/her account number. The call flow tries to help, via icons 303-1 by changing the message to the user, trying to help the user by asking (or telling) different questions or instructions. When all else fails, screen 31 and icons 310, 313-1 control the transfer (or hang up) functions.

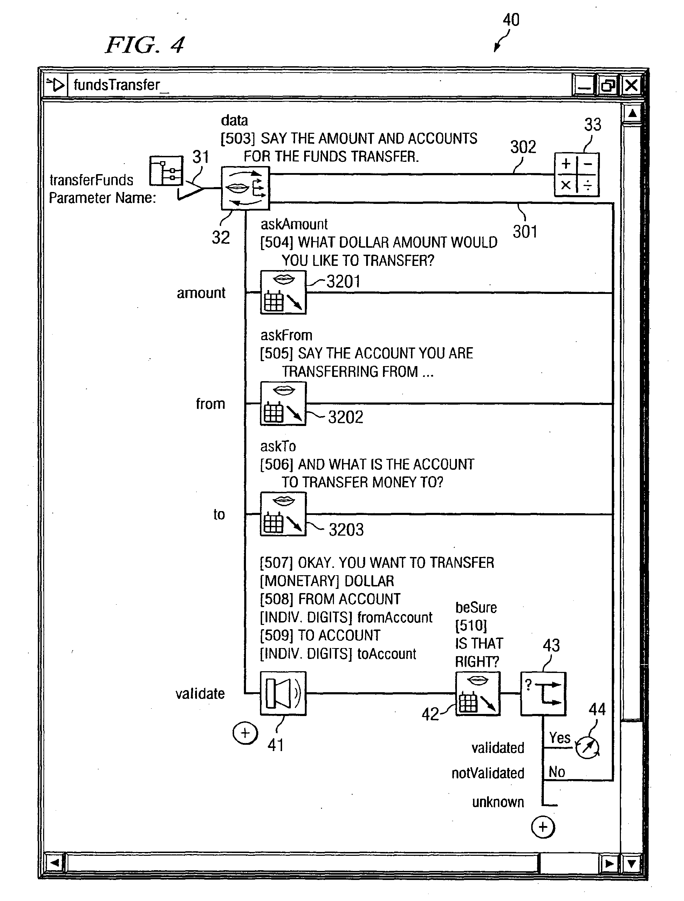

FIGURE 4 shows call flow 40 which illustrates the validation process. Call flow 40 is essentially the same as call flow 10 (FIGURE 1), except that a leg has been added starting with icon 41 and including icons 42, 43, and 44. Call flow 40 follows the form shown in FIGURE 1.

Within leg 41, a slot is defined that is never filled by the talker since it actually is used only when the legs are all filled. Icon 41 will repeat to the caller what the caller has requested, by saying, "Do you want to transfer $500 from account XXXX to account YYYY?". Icons 42 and 43 verify that the caller has answered with the proper grammar, such as "yes", "okay," or an equivalent affirmative response. If the transfer is validated, icon 44 controls the flow of information to the proper location so as to control the transfer. If the transaction is not verified, then the system loops back and restarts.

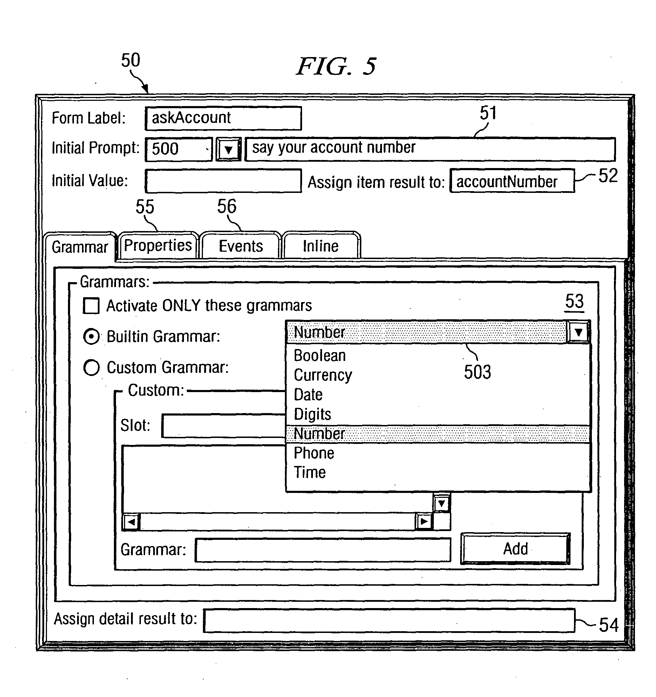

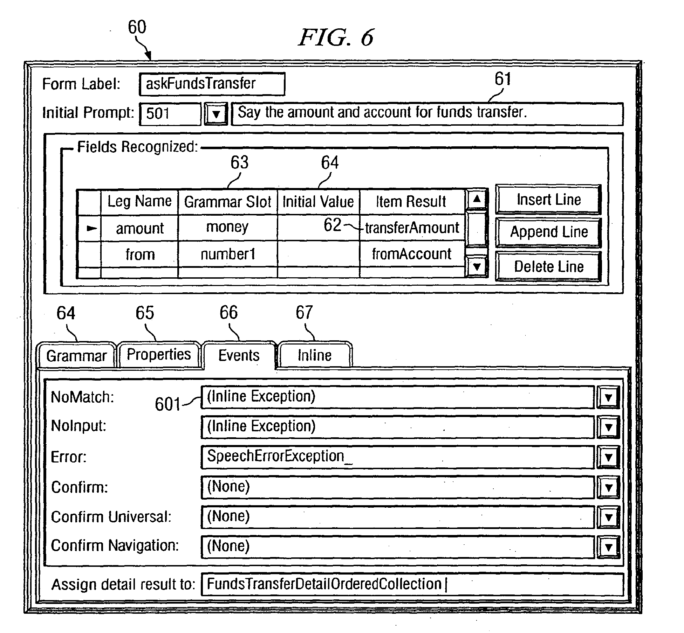

FIGURES 5 and 6 show one graphical representation of the implementation of FIGURES 1-4. FIGURE 5, shows form 50 which deals with single fields and allows a user to indicate an initial prompt, such as "Say your account number," 51. The variable 52 is identified that will hold the recognition results. Field 53 allows the user to pick a grammar that is going to be active for the recognition instance defined by the form, or, if desired, the user can write his/her own grammar(s). There is a list on the form to support customizations and there can be as many grammars active as desired for this recognition instance. In the example, "number" grammar 503 is selected.

Form 50 also provides field 54 to hold the detail recognition results when necessary. The detail recognition results allow the user to obtain as much information as possible about the result. For example, the confidence scores for a particular recognition event and other details are available to allow the user specific processing. Thus, for any particular recognition event, the user can take the high road and trust the recognizer to provide the right piece of information or the user can take the detail road and base his/her next action on the level of detail (for example, confidence level).

In addition, form 50 will allow specific properties 55 to be passed to the recognizer. For example, when an account number is being requested, the recognition engine could be told the length of the number to expect.

Events field 56 is used to control selected events, such as, for example, time out. The user can determine the type of processing desired when a time out occurs. Also, the user can invoke a global definition, (time period), or can provide a specific period for this instance of recognition.

Sometimes a responding user (talker) says something that does not fit into the grammar. This is a no-match condition. The programming user might want to do something specific for a no match, such as providing a prompt with an example in it. The programming user might want to continue the answer. For example, if the recognizer believes it understood what was said, but is only 50% certain, the application can then play back the perceived value and then "listening" for a 'yes' or 'no.'

Another type of property is confirmation thresholds themselves. What percentage of certainty is going to cause the confirmed leg to be executed as a recognition? Thus, a programmer can at every instances of speech recognition indicate what percent certainty will be tolerated at that point. For example, it is harder to recognize 123ABC, than it is to recognize Sally, a prompt name. The programmer might raise the confirmation thresholds when recognizing certain types of grammars. That is a benefit of having these properties and having them be instance related.

FIGURE 6 shows from 60 which is used for multiple fields which are essentially complex prompts where the application is expecting multiple pieces of information to come back from the talker. This is shown in FIGURES 1-4 graphically. Form 60 gives the programmer the ability to define the initial prompt 61 and to define the variable 62 that is going to hold the phrase. This associates the phrase result with the slot value 63 inside a grammar because there is one grammar file that understands the entire phrase that is expected. When the event recognizer understands multiple pieces of information, it passes back that information to the application, using slots. Column 64 is called Initial Value and is used when the application already knows a particular value. Column 62 is empty on the form but let's assume a variable is put there called "My Money." When the application is being executed and My Money has a value, then the system need not try to interpret what is said, and need not even ask the question. This is a programming construct that simplifies the amount of code needed. If the field is populated with a specific value instead of having the system say, "speak the amount for funds transfer," the system begins by saying, "What account would you like to transfer $XX dollars from?"

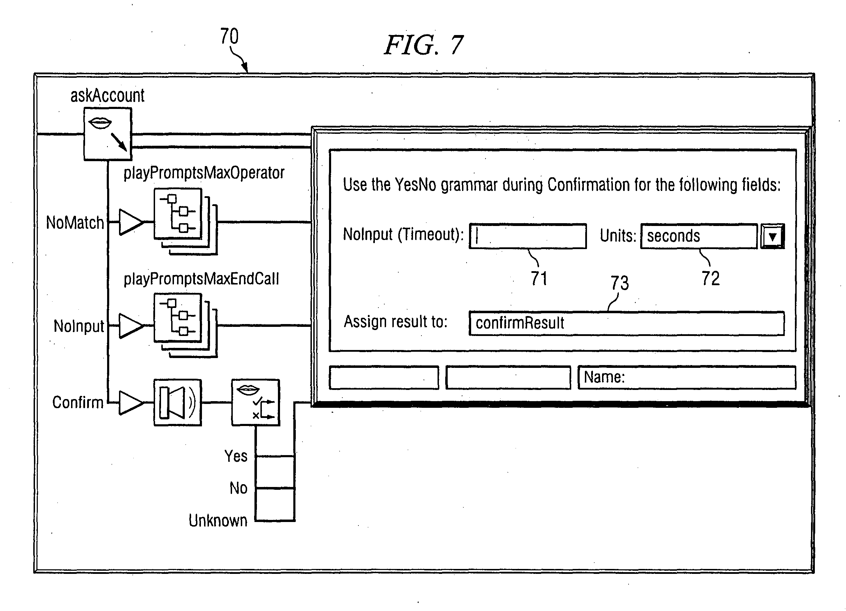

FIGURE 7 shows confirmation form 70 which controls as validation icons 41 and 43 (FIGURE 4). The legs on it are Yes, No and Unknown. Form 70 contains parameters that define the time out value 71, and the units for the time out 72, and the results 73, which is the string of Yes, No, or an Unknown value. The reason for using a confirmation form is that the form forces the automatic changing of the grammar for further processing. For example, if an answer has been received and the question asked in return is, "Did you say, 1, 2, 3, 4, 5?". Then, if the talker says no, the system knows that 1, 2, 3, 4, 5 is an invalid answer and those numbers (or words or phrases) are removed form the grammar for the next try. So what it means is that by using this form, the next recognition event should have improved results. This process can be applied, for example, to a 'name' grammar. Assume the grammar contains a bunch of names, including Mabel, Mildred, Manny. Assume also that in response to the question, "Who are you calling?", the talker says, "mumble, mumble." The system then says, "Did you say Mabel?". The talker's response is "No." The system could then remove Mabel from the grammar and ask the talker to repeat the name.

The selection of grammars, or the elimination of certain words from a grammar, can be very helpful. For example, assuming name recognition and assuming a male name grammar, a female name grammar and a generic name grammar. In response to a received name the recognizer returns a low confidence score, but reports that it is more confident that it was a female name and not a male name.

In this situation, the caller can be asked to repeat the name, but this time the male and generic grammars are off. Also, it could be that the name with the highest confidence score is Sam, but the recognizer indicates that it has a high confidence (perhaps based on other characteristics or other information) that the speaker name is a female name. Then the system would accept the female name with the highest confidence score, even though a male name (Sam) had a higher absolute score. The male-female confidence level could come from many sources, including a database of expected results dependant on other known results, or the speech itself could yield clues. Examples of such clues could be a speech pattern or power, or frequency components of the speech.

FIGURE 8 shows one embodiment of the navigation grammar. The navigation grammar shown in FIGURE 8 is where the programmer graphically indicates (81-83) what short cut phrases to be on the lookout for. These could be checking balance 81, savings balance 82, money market balance 83, or any other anticipated phrases pertaining to the session being conducted. These shortcut (or 'jump') phrases are graphically shown and can be added, icon by icon, at any time. These phrases can be activated any time during the call flow. Once the system 'hears' one of these phrases, it jumps to the proper call flow routine to obtain the desired information, as shown in FIGURE 1.

Two scenarios must be looked at. First, the talker could actively be desiring to go to a new call flow application or the talker could be looking for information in order to complete the current call flow. This determination is made by establishing 'anticipating' phrases for each application. If the talker says any of these anticipating phrases, the system knows to hold the place and retrieve the desired information. If the talker says an out-of-context phrase not in the 'received' list, then the system begins a new call flow routine, based on the word or phrase received.

Form 85 on FIGURE 8 shows some of the anticipated phrases for a funds transfer call flow and the programmer can add as many as desired, which will show up on the icon graphical display shown on the left. This is a mixed initiative where the talker has control over the conversation but the system remembers the context because the 'new' context is a related context on the icon graph that is shown as being inlined.

One method of adding inlined call flows, such as checking balance, savings balance, etc. is to double click on plus sign 801 located underneath icon 84. This adds a new leg identical to one of the speech navigation link legs, basically indicating that this is a replacement for the generic processing defined on that async page. With respect to FIGURE 1 everything that is below plus icon 801 is considered optional, while everything above is mandatory. This allows for a very high level picture for a significant amount of call flow that is being handled for a caller.

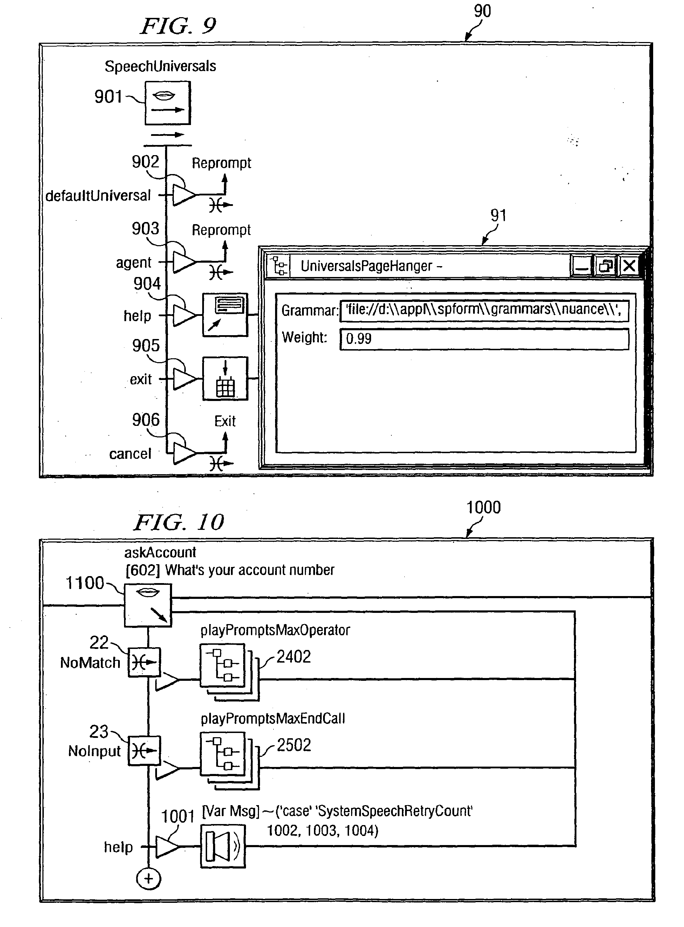

FIGURE 9 shows screen 90 for controlling inline behaviors for universal grammars. This environment allows a programmer to identify the grammar to contain universal (available throughout the call flow) words or phrases as well as the action to take when one of those phrases is spoken. Screen 91 allows for the definition of the universal grammar and provides a default weight for phrases contained in the grammar. A universal grammar is a set of words, such as Help (904), Exit (905), Cancel (906), Transfer to Operator, etc. Upon detection of any phrase in the global grammar, the system would normally just switch from the current call flow to the call flow associated with the received command. However, the environment of the disclosure recognizes that there might be some inlining or instant specific behaviors that the programmer might want to take advantage of with regard to these universal phrases, as discussed above.

FIGURE 10 has the phrase Help (1001) inlined. Help is defined on the universals page, but since it is inlined in this call flow there will be context specific behaviors for this recognition event. For example, if the question presented to the talker is, "What is your account number?" (as shown by icon 1100) and the talker says, "Help!", instead of transferring the talker to the general help call flow, the response might be; "Your account number is located on the bottom right corner of your check", or, "Your account number can be seen in the top left corner of your last statement. Because 'Help' has been added as an inline in the development environment, not only can the system provide instance information it can also provide logic around that instance information. Also, every time help is asked for, a different message can be used. Thus, as shown in FIGURE 10, Help message 1002 is played the first time, while message 1003 is played the second time, and message 1004 is played the third time.

Another benefit of having the inline association, is that conversational prompts are possible. Thus, a whole call flow could be created to say okay, get a check in front of you and look at the bottom right corner. Or, the flow could ask if the talker has his/her last statement. If so, look at the bottom right corner. If the talker says 'no', then another call flow could be used to try to obtain the account number. This is all available because the programmer can add legs, simply by adding or moving icons around on a graphical layout.

Although the present invention and its advantages have been described in detail, it should be understood that various changes, substitutions and alterations can be made herein without departing from the spirit and scope of the invention as defined by the appended claims. Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps.

## Claims

1. A call flow routine comprising:
a directed call flow routine established by one or icons, each icon representing a leg of said call flow, each of said legs of said directed call flow necessarily populated in order to complete said directed call flow routine; and
an optional call flow routine established by icons, each icon representing a leg of said optional call flow routine, each said leg optionally invoked under control of a detected phrase outside of the phrases expected by said directed call flow.

2. The call flow of claim 1 further comprising:
returning to said directed call flow after completing an invoked optional call flow when said detected phrase is from an anticipated grammar associated with said directed call flow.

3. The call flow of claim 2 further comprising:
beginning an entirely new call flow when said detected phrase is not from an anticipated grammar associated with said directed call flow.

4. The call flow of claim further comprising:
changing the message of said optional call flow depending upon the context in which said optional call flow was invoked.

5. The call flow of claim 1 further comprising:
changing the message of said optional call flow depending upon the context in which said optional call flow was invoked and the number of times said specific optional call flow has been invoked within a specific session.

6. A graphical tool for use in interactive response systems, said tool operable for displaying to a call flow designer the logical operation of an application; said tool comprising:
means for transmitting prompts to a talking user, said prompts including instructions for verbalizing a response in at least one word chosen by the talking user;
means for receiving from said talking user answers to said prompts, said answers including at least one word spoken by said talking user;
means for returning to an application matches between what a talking user has responded and a preestablished grammar; and
means, including the placement of icons, for establishing and displaying a call flow routine having at least one slot return, said slot return identifying at least one phrase outside of the expected range of responses.

7. The tool of claim 6 further comprising:
means, including the placement of icons, for identifying returned ones of said phrases which are outside the expected responses as being within an anticipated jump phrase.

8. The tool of claim 7 further comprising:
means for fulfilling a talking user's request based upon a received phrase outside the expected responses;
means for returning said talking user to said prompts when said request has been fulfilled and said request was within said anticipated jump phrases; and
wherein said fulfilling means is part of the call flow established and displayed by said icon placement means.

9. A computer system having a display, said computer system providing a graphical development environment for developers, said computer system comprising:
means for graphically representing an application flow as a plurality of icons, some of said icons representing sub-routines;
means for manipulating said icons, including said sub-routine icons, into single slot and multiple slot returns, each said return handling a different expected functional response from a talking user; and
means for creating a loop for controlling out of context verbal responses according to the nature of each said response.

10. The computer system of claim 9 wherein said controlling means include the preestablishment of phrases in context to said application flow.

11. The computer system of claim 10 wherein said controlling means further comprising:
means for returning to said application flow after digressing to another application, said returning means controlled, at least in part, by detection of one of said preestablished phases.

12. The method for programming an interactive response system where at least some of the interactive responses include bidirectional voice prompts, said method comprising the step of:
arranging icons to form a plurality of return slots, each return slot having subroutines shown by other icons, said subroutines establishing conditions for application operation;
at least some of said return slots are operable to receive returns in response to a grammar against which returned voice prompts from a talking user is matched; and
at least some of said return slots are operable to receive returns in response to a grammar outside of the expected grammar but within a related context to said expected grammar.

13. The method of claim 12 further including the step of:
arranging said icons such that when a non-expected grammar is received, next system operations are dependent upon whether or not said, unexpected grammar is within said related context grammars.

14. A method for controlling IVR call flows; said method comprising:
establishing a plurality of grammars, each grammar having contained therein expected responses to a given question;
using icon controlled preestablished routines for establishing, for a given compound question, which grammars are to be used for each answered portion of such compound question; and
using icon controlled preestablished routines for controlling subsequent call flows in response to an unexpected answer to a given question.

15. The method of claim 14 further including:
when an unexpected answer has been received, performing the desired operation contained in said preestablished routine.

16. The method of claim 15 further including:
after performing said desired operation, taking further action dependent upon the context of said unexpected answer.

17. The method of claim 15 further including:
after performing said desired operation, taking further action dependent upon whether or not said unexpected answer has been preidentified as being in context to said given question.

18. A graphically controlled IVR system, said system comprising:
a system for establishing a call flow having multiple slots for receiving verbal responses to a compound question, each slot associated with a grammar appropriate for an expected response;
circuitry for directing each such verbal response to a grammar for interpretation in accordance with an expected grammar for said response;
circuitry for receiving in an appropriate slot, interpretations from said grammar when a verbal response is proper; and
circuitry for receiving in an appropriate slot, interpretations from said grammar when a verbal response is non-responsive; and
circuitry for controlling subsequent system operation dependant upon whether said verbal response was within an expected range of non-response.

19. The system of claim 18 wherein said subsequent system operation is a return to the call flow in progress before said non-response was received.

20. The system of claim 19 wherein said subsequent system operation is a switch to a new call flow.

21. A method of establishing a call flow routine, said method comprising:
establishing a directed call flow routine by one or more icons, each icon representing a leg of said call flow, each of said legs of said directed call flow necessarily populated in order to complete said directed call flow routine; and
establishing an optional call flow routine by icons, each icon representing a leg of said optional call flow routines, each said leg optionally invoked under control of a detected phrase outside of the phrases expected by said directed call flow.

22. The method of claim 21 further comprising:
returning to said directed call flow after completing an invoked optional call flow when said detected phrase is from an anticipated grammar associated with said directed call flow.

23. The method of claim 22 further comprising:
beginning an entirely new call flow when said detected phrase is not from an anticipated grammar associated with said directed call flow.

24. The method of claim 21 further comprising:
changing the message of said optional call flow depending upon the context in which said optional call flow was invoked.

25. The method of claim 21 further comprising:
changing the message of said optional call flow depending upon the context in which said optional call flow was invoked and the number of times said specific optional call flow has been invoked within a specific session.

26. A system of establishing a call flow routine, said system comprising:
one or more icons operable for a establishing a directed call flow routine, each said icon representing a leg of said call flow, each of said legs of said directed call flow necessarily populated in order to complete said directed call flow routine; and
one or more icons operable for establishing an optional call flow routine, each said icon representing a leg of said optional call flow routines, each said leg optionally invoked under control of a detected phrase outside of the phrases expected by said directed call flow.

27. The system of claim 26 further including an anticipated grammar associated with said directed call flow and wherein said returning to said directed call flow after completing an invoked optional call flow when said detected phrase is from said anticipated grammar.

28. The system of claim 27 further comprising:
control for beginning an entirely new call flow when said detected phrase is not from said anticipated grammar associated with said directed call flow.

29. The system of claim 26 further comprising:
control for changing the message of said optional call flow depending upon the context in which said optional call flow was invoked.

30. The system of claim 26 further comprising:
control for changing the message of said optional call flow depending upon the context in which said optional call flow was invoked and the number of times said specific optional call flow has been invoked within a specific session.
